# EUROPÄISCHE PATENTSCHRIFT

(11) **EP 1 315 337 B1**
(45) Veröffentlichungstag und Bekanntmachung des Hinweises auf die Patenterteilung: **12.08.2009**
(21) Anmeldenummer: 01125995.9
(22) Anmeldetag: 31.10.2001
(51) Int. Cl.: H04L 12/413, H04J 3/06, G06F 11/267, H04L 12/26, H04L 1/24

(54) **Bus-Interface**
BUS-Interface
Interface du bus

(43) Veröffentlichungstag der Anmeldung: 28.05.2003
(73) Patentinhaber: Infineon Technologies AG, 81669 München (DE)
(72) Erfinder: Barrenscheen, Jens, Dr., 81669 München (DE); Vowe, Achim, Dr., 80469 München (DE)
(74) Vertreter: Jannig, Peter

(56) Entgegenhaltungen:
- EP-A- 0 813 321
- DE-A- 3 402 076
- DE-A- 4 224 508
- FR-A- 2 726 675
- US-A- 5 267 251
- US-A- 5 345 489
- US-A- 5 448 180
- US-A- 5 448 561
- US-A- 5 524 213
- US-A- 5 770 952
- US-A- 5 892 927
- US-B1- 6 311 149
- HARTWICH ET AL.: "The Configuration of the CAN Bit Timing" 6TH INTERNATIONAL CAN CONFERENCE, [Online] 2. - 4. November 1999, Seiten 1-10, XP002236869 Turin, IT Gefunden im Internet: <URL:www.can.bosch.com> [gefunden am 2003-04-02]
- MOTOROLA: "HC05 Advance Information"[Online] 1997, Seiten 5-1-6-14, Gefunden im Internet: URL:http://www.datasheetcatalog.com/datash eets_pdf/M/C/6/8/MC68HC05X16.shtml> [gefunden am 2008-06-27]

## Beschreibung

Die vorliegende Erfindung betrifft eine Vorrichtung gemäß dem Oberbegriff des Patentanspruchs 1 .

Ein mehrere Einrichtungen miteinander verbindender Bus ist beispielsweise der sogenannte CAN-Bus; das Bus-Interface, welches zum Anschluß einer Einrichtung an den CAN-Bus zwischen der betreffenden Einrichtung und dem CAN-Bus vorgesehen werden muß, wird häufig auch als CAN-Controller bezeichnet.

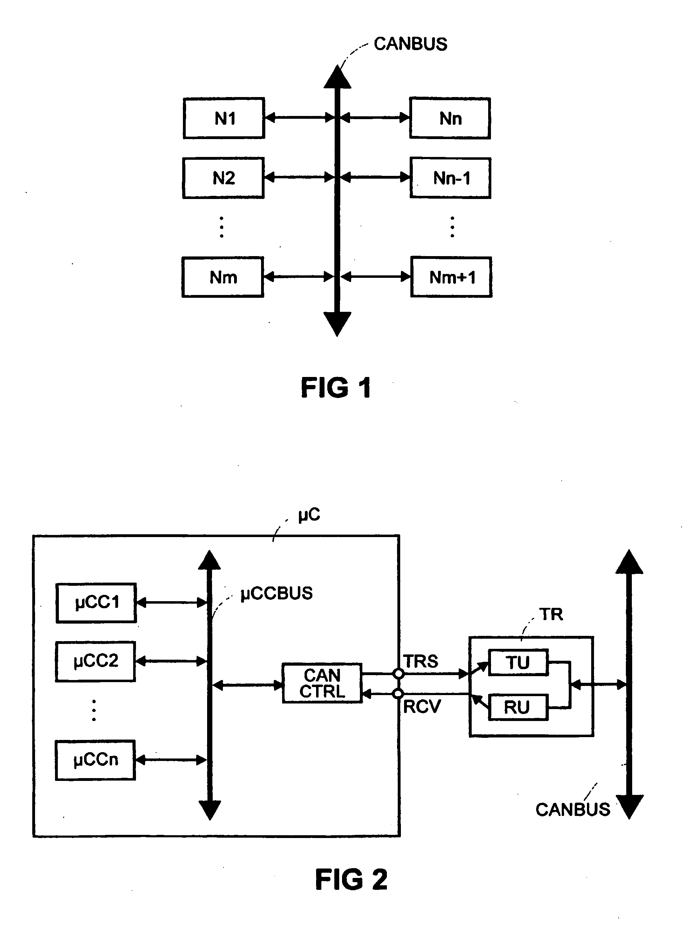

Ein Beispiel für eine einen CAN-Bus enthaltende Anordnung ist in Figur 1 veranschaulicht.

Die gezeigte Anordnung enthält einen CAN-Bus CANBUS und daran angeschlossene, im allgemeinen als Knoten bezeichnete Einrichtungen N1 bis Nn. Die Knoten N1 bis Nn bestehen jeweils aus der eigentlich an den CAN-Bus anzuschließenden Einrichtung, und einem CAN-Controller, welcher für den ordnungsgemäßen Anschluß der an den CAN-Bus anzuschließenden Einrichtung an den CAN-Bus sorgt. Bei der an den CAN-Bus anzuschließenden Einrichtung kann es sich um eine beliebige Einrichtung handeln, beispielsweise um einen Mikrocontroller oder eine sonstige Steuereinrichtung, einen Sensor, einen Aktor, ein Benutzer-Interface wie beispielsweise eine Tastatur oder eine Anzeigeeinrichtung, etc.

Der Aufbau eines Knotens, bei welchem die an den CAN-Bus anzuschließende Einrichtung ein Mikrocontroller ist, ist in Figur 2 gezeigt.

Der in der Figur 2 gezeigte Knoten umfaßt einen Mikrocontroller µC, einen zum Anschluß des Mikrocontrollers µC an den CAN-Bus CANBUS dienenden CAN-Controller CANCTRL, und einen Transceiver TR. Der CAN-Controller CANCTRL ist im betrachteten Beispiel Bestandteil des Mikrocontrollers µC, könnte aber auch durch einen eigenen Baustein gebildet werden.

Der Mikrocontroller µC enthält neben dem CAN-Controller eine Reihe weiterer Komponenten µCC1 bis µCCn, welchen über einen internen Bus µCBUS des Mikrocontrollers µC miteinander verbunden sind. Die Komponenten µCC1 bis µCCn des Mikrocontrollers µC umfassen beispielsweise eine oder mehrere CPUs, einen oder mehrere Speicher, und diverse Peripherieeinheiten wie beispielsweise einen A/D-Wandler, einen D/A-Wandler, einen DMA-Controller, einen Timer, ein USB-Interface, etc.

Der Transceiver TR ist über einen Transmit-Anschluß TRS und einen Receive-Anschluß RCV des Mikrocontroller µC mit diesem verbunden, und enthält
- eine Sendeeinrichtung TU, welche vom CAN-Controller CANCTRL erhaltene Daten auf den CAN-Bus CANBUS ausgibt, und
- eine Empfangseinrichtung RU, welche über den CAN-Bus CANBUS übertragene Daten an den CAN-Controller CANCTRL weiterleitet,
und dient insbesondere zur Pegelumsetzung, d.h. zur Umsetzung der Pegel, die die vom Mikrocontroller ausgegebenen Signale aufweisen, in die Pegel, die die über den CAN-Bus CANBUS übertragenen Signale aufweisen müssen, und zur Umsetzung der Pegel, die die über den CAN-Bus CANBUS übertragenen Signale aufweisen, in die Pegel, die die dem Mikrocontroller zugeführten Signale aufweisen müssen.

Wenn der Mikrocontroller µC, genauer gesagt eine der Mikrocontroller-Komponenten µCC1 bis µCCn Daten an einen der am CAN-Bus CANBUS angeschlossenen Knoten N1 bis Nn übermitteln möchte, transferiert die betreffende Mikrocontroller-Komponente diese Daten über den internen Bus µCBUS des Mikrocontrollers µC an den CAN-Controller CANCTRL. Der CAN-Controller setzt diese Daten in das vorgeschriebene Format, genauer gesagt in einen sogenannten Frame um, und gibt diesen Frame zum nächstmöglichen Zeitpunkt über den Transceiver TR auf den CAN-Bus CANBUS aus.

Der CAN-Controller CANCTRL bekommt darüber hinaus über den Transceiver TR die über CAN-Bus CANBUS transferierten Frames zugeführt, überprüft, ob die darin enthaltenen Daten für den Mikrocontroller bestimmt sind, und leitet bei Bedarf (wenn die Daten für den Mikrocontroller bestimmt sind) die aus dem Frame extrahierten Nutzdaten über den internen Bus µCBUS des Mikrocontrollers ein eine vorgegebene Komponente µCCx desselben weiter.

Für einen ordnungsgemäßen Betrieb des CAN ist es erforderlich, daß eine Reihe von Bedingungen eingehalten wird.

Eine dieser Bedingungen besteht darin, daß alle Knoten N1 bis Nn die von ihnen auf den CAN-Bus CANBUS ausgegebenen Daten mit der selben Bitrate bzw. mit dem selben Bittiming ausgeben.

Eine weitere Bedingung besteht darin, daß die über den CAN-Bus CANBUS transferierten Daten ausreichend steile Flanken aufweisen. Die Flanken sollten andererseits aber auch nicht zu steil sein, weil anderenfalls zu starke elektromagnetische Störungen hervorgerufen werden.

Um diese Bedingungen erfüllen zu können, müssen durch ein Testgerät entsprechende Messungen auf dem CAN-Bus vorgenommen werden, und die am CAN-Bus angeschlossenen Knoten, genauer gesagt die CAN-Controller der jeweiligen Knoten unter Berücksichtigung dieser Messungen konfiguriert werden.

Es dürfte einleuchten, daß dies mit einem sehr großen Aufwand verbunden ist.

Ein besonders hoher Aufwand entsteht, wenn die über den CAN-Bus zu übertragenden Daten mit einer hohen Datenübertragungsrate übertragen werden sollen, oder wenn die übertragenen Signale aus EMV-Gründen eine möglichst geringe Flankensteilheit aufweisen sollen. Dann muß das Bittiming nämlich besonders genau eingestellt werden.

Besonders groß ist der Aufwand auch, wenn an einen existierenden CAN-Bus nachträglich ein neuer Knoten angeschlossen werden soll, und sich bei den hierzu am CAN-Bus vorgenommenen Messungen herausstellt, daß - bedingt durch hinzugekommene Leitungskapazitäten - die Flankensteilheit der Signale, die von den bereits vorher am CAN-Bus angeschlossenen Knoten ausgegeben werden, nicht mehr ausreichen. In diesem Fall müssen in sämtlichen Knoten die Treiberstärken erhöht werden.

DE 3402 076 (Philips) offen bart den Oberbegriff des Anspruch 1. US 6311149 (Ryan) offen bart ein Test- gerät, das mit Multiplexern so verschaltet ist, daß verschiedene Vorgänge gemessen werden Können.

Entsprechende Probleme können auch bei anderen Bussystemen auftreten.

Der vorliegenden Erfindung liegt daher die Aufgabe zugrunde, eine Möglichkeit zu finden, durch welche sich die Inbetriebnahme und die Veränderung von Bussystemen vereinfachen läßt.

Diese Aufgabe wird erfindungsgemäß durch die in Patentanspruch 1 beanspruchte Vorrichtung gelöst.

Durch die vorliegende Erfindung kann die Ermittlung der zur Konfiguration des Bus-Interfaces benötigten Daten einfacher, schneller, und genauer erfolgen als es bei der Ermittlung der betreffenden Daten durch ein externes Testgerät möglich ist.

Darüber hinaus können durch den Timer sogar Informationen wie beispielsweise interne Signallaufzeiten und interne Zustände (Abtastzeitpunkt, Datenübertragungszeitpunkt, Protokoll-Zustand etc.) im Bus-Interface erhalten werden, die unter Verwendung eines externen Testgerätes überhaupt nicht beschafft werden können.

Ferner ist die Vorrichtung auch noch in der Lage, sich selbständig an die gegebenen Verhältnisse anzupassen.

Des weiteren kann der Timer auch zur Durchführung eines Selbsttests verwendet werden, durch welchen die Integrität der Busverbindung getestet werden kann. Eine solche Testmöglichkeit kann insbesondere in sicherheitsrelevanten Applikationen von ausschlaggebender Bedeutung für die Verwendbarkeit des Bus-Interfaces sein.

Vorteilhafte Weiterbildungen der Erfindung sind den Unteransprüchen, der folgenden Beschreibung, und den Figuren entnehmbar.

Die Erfindung wird im folgenden anhand von Ausführungsbeispielen unter Bezugnahme auf die Figuren näher erläutert. Es zeigen
- Figur 1: den Aufbau eines CAN-Bussystems,
- Figur 2: den Aufbau eines CAN-Knotens, und
- Figur 3: den Aufbau des im folgenden beschriebenen CAN-Controllers.

Das im folgenden beschriebene Bus-Interface ist ein CAN-Controller, über welchen eine an einen CAN-Bus anzuschließende Einrichtung an den CAN-Bus angeschlossen wird. Es sei jedoch bereits an dieser Stelle darauf hingewiesen, daß die Besonderheiten des beschriebenen CAN-Controllers sich auch bei beliebigen anderen Bus-Interfaces, d.h. auch in Bus-Interfaces zum Anschluß einer Einrichtung an einen anderen Bus als einen CAN-Bus einsetzen läßt.

Die über den beschriebene CAN-Controller an den CAN-Bus angeschlossene Einrichtung ist im betrachteten Beispiel ein Mikrocontroller. Es könnte sich jedoch auch um eine beliebige andere Einrichtung handeln.

Der CAN-Controller ist im betrachteten Beispiel Bestandteil des Mikrocontrollers, welcher über ihn an den CAN-Bus angeschlossen werden soll. Der CAN-Controller kann aber auch außerhalb des Mikrocontroller vorgesehen sein.

Bezüglich des Aufbaus des den beschriebenen CAN-Controller enthaltenden Knotens, und des diesen Knoten enthaltenden Bussystems wird auf die Figuren 1 und 2 und die darauf bezugnehmende Beschreibung verwiesen.

Der beschriebene CAN-Controller weist die Besonderheit auf, daß ein im CAN-Controller oder ein in dem den CAN-Controller enthaltenden Baustein vorhandener Timer verwendet wird, um das Timing von innerhalb des Bus-Interfaces und/oder auf dem Bus stattfindenden Vorgängen zu ermitteln.

Im betrachteten Beispiel enthalten sowohl der CAN-Controller als auch der den CAN-Controller enthaltende Baustein, d.h. der den CAN-Controller enthaltende Mikrocontroller einen Timer.

Der Timer des Mikrocontrollers ist eine der Mikrocontroller-Komponenten µCC1 bis µCCn.

Der Timer des CAN-Controllers ist der Timer, der verwendet wird, um die Informationen zu erzeugen, die den Zeitpunkt oder die Reihenfolge des Eingangs der eingehenden Messages, oder die Anzahl der bei der Datenübertragung aufgetretenen Fehler repräsentieren. Die Verwendung eines für die genannten Zwecke vorgesehenen Timers des CAN-Controllers für die nachfolgend näher beschriebenen Ermittlungen stellt für die genannte Verwendung des Timers keine Einschränkung dar. Während der im folgenden beschriebenen Ermittlungen kann auf die Verwendung des Timers zur Erzeugung von Informationen, die den Zeitpunkt oder die Reihenfolge des Eingangs der eingehenden Messages, oder die Anzahl von bei der Datenübertragung aufgetretenen Fehler repräsentieren, im allgemeinen problemlos verzichtet werden.

Wenn - anders als im betrachteten Beispiel - weder im CAN-Controller noch in dem den CAN-Controller enthaltenden Baustein von Haus aus ein Timer vorhanden ist, müßte ein für die im folgenden beschriebenen Aktionen ein eigener Timer vorgesehen werden, wobei dieser Timer jedoch auch andere Aufgabe wahrnehmen könnte als die im folgenden beschriebenen Aufgaben.

Vorzugsweise ist der Timer Bestandteil des CAN-Controllers, weil er dann einfacher mit den interessierenden internen Signalen und/oder Speichern verbunden werden kann, und weil dann die Laufzeit der Signale, durch welche der Timer zurückgesetzt und getriggert wird, besonders klein ist, und sich folglich eine genauere Ermittlung der interessierenden Größen erzielen läßt.

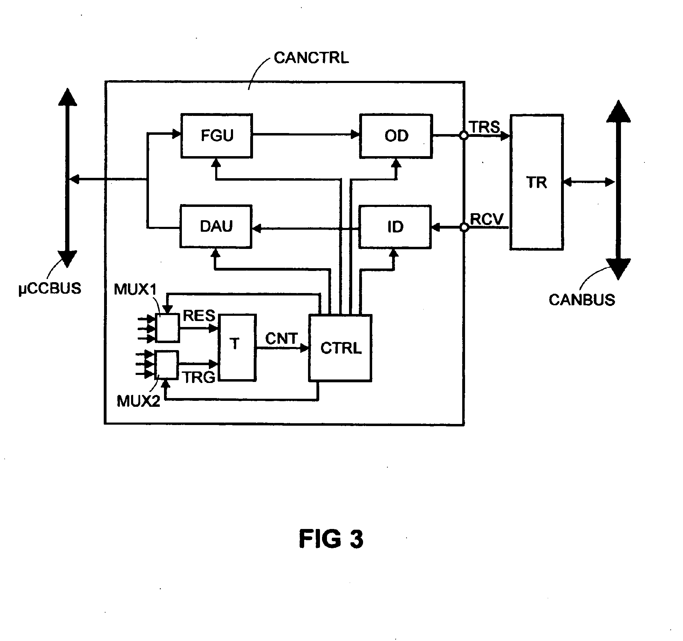

Der Aufbau eines einen Timer enthaltenden CAN-Controllers ist in Figur 3 veranschaulicht. Der Vollständigkeit halber sei bereits an dieser Stelle angemerkt, daß vom CAN-Controller nur die vorliegend besonders interessierenden Bestandteile gezeigt sind und beschrieben werden.

Der in der Figur 3 gezeigte CAN-Controller enthält
- einen Ausgangstreiber OD, durch welchen die aus dem CAN-Controller CANCTRL (aus dem Mikrocontroller µC) auf den CAN-Bus CANBUS auszugebende Daten (Frames) auf diesen, genauer gesagt zu dem zwischen dem CAN-Controller und dem CAN-Bus vorgesehenen Transceiver TR ausgegeben werden werden,
- einen Eingangstreiber ID, über welchen über den CAN-Bus CANBUS zum CAN-Controller CANCTRL transferierte Daten in diesen eingelesen werden,
- eine Framegenerierungseinrichtung FGU, welche aus den ihr vom internen Bus µCBUS des Mikrocontrollers zugeführten, zu einer der am CAN-Bus CANBUS angeschlossenen Knoten N1 bis Nn zu übertragenden Daten Frames erzeugt, und diese Frames über den Ausgangstreiber OD aus dem CAN-Controller CANCTRL ausgegeben werden,
- eine Datenauswerteeinrichtung DAU, welche ermittelt, ob die über den CAN-Bus CANBUS übertragenen und ihr über den Eingangstreiber ID zugeführten Daten für den Mikrocontroller bestimmt oder von Interesse sind, und gegebenenfalls die im betreffenden Frame enthaltenen Nutzdaten extrahiert und an eine andere Komponente des Mikrocontrollers, beispielsweise an die CPU weiterleitet oder zur Abholung bereitstellt,
- einen im folgenden noch näher beschriebenen Timer T, und
- eine Steuereinrichtung CTRL, welche die vorstehend genannten anderen Komponenten und gegebenenfalls weitere Komponenten des CAN-Controllers steuert.

Der Timer T weist
- einen Rücksetzanschluß RES, über welchen er zurücksetzbar ist,
- einen Triggeranschluß TRG, über welchen er zur Inkrementierung oder Dekrementierung seines Zählstandes veranlaßbar ist, und
- einen Ausgangsanschluß CNT auf, über welchen er den jeweils aktuellen Zählstand ausgibt.

Mit welchen Komponenten oder Punkten der Rücksetzanschluß RES und der Triggeranschluß TRG des Timers T verbunden werden, hängt von der jeweiligen Verwendung des Timers ab. Die Auswahl der den genannten Anschlüssen des Timers T zugeführten Signale erfolgt im betrachteten Beispiel durch einen dem Rücksetzanschluß RES vorgeschalteten ersten Multiplexer MUX1 und einen dem Triggeranschluß TRG vorgeschalteten zweiten Multiplexer MUX2. Die Eingangsanschlüsse der Multiplexer MUX1 und MUX2 sind mit den Komponenten oder Punkten verbunden, mit welchen der Rücksetzanschluß RES und der Triggeranschluß TRG in den verschiedenen Verwendungsarten des Timers verbunden sein müssen. Die Steuerung der Multiplexer erfolgt durch die Steuereinrichtung CTRL. Die Steuereinrichtung legt auch fest, wozu der Timer T jeweils verwendet wird.

Den Multiplexern MUX1 und MUX2 kann eine in der Figur 3 nicht gezeigte kombinatorische Logik vorgeschaltet sein, durch welch die im CAN-Controller zur Verfügung stehenden Signale in die jeweils benötigten Timer-Steuersignale umgesetzt werden.

Der Ausgangsanschluß CNT des Timers T ist zumindest mit der Steuereinrichtung CTRL, bei Verwendung des Timers für andere als die nachfolgend beschriebenen Zwecke eventuell aber auch mit weiteren Komponenten des CAN-Controllers verbunden.

Bei den im folgenden beschriebenen Verwendungsmöglichkeiten des Timers werden die von diesem gelieferten Zählstände von der Steuereinrichtung CTRL
- für eine automatische Konfigurierung der Framegenerierungseinrichtung FGU, der Datenauswerteeinrichtung DAU, des Ausgangstreibers OD und/oder des Eingangstreibers ID verwendet, und/oder
- aus dem CAN-Controller CANCTRL ausgegeben oder zur Abholung bereitgestellt, wodurch der Benutzer des Systems die Möglichkeit hat, die ordnungsgemäße Funktion des CAN-Controllers zu überprüfen, und die Konfiguration der zu konfigurierenden CAN-Controller-Komponenten selbst vorzunehmen.

Es kann sich als vorteilhaft erweisen, wenn der Timer ein oder mehrere Capture-Register enthält, in welchen beim Auftreten bestimmter Ereignisse der jeweils aktuelle Zählstand des Timers gespeichert wird, wobei auch vorgesehen werden kann, daß der Timer beim Auftreten der bestimmten Ereignisse ohne Unterbrechung weiterläuft.

Im folgenden werden nun die verschiedenen Verwendungsmöglichkeiten des Timers beschrieben.

Eine erste Verwendungsmöglichkeit des Timers T besteht darin, daß dieser zur Ermittlung der Zeit verwendet wird, während welcher ein einem Bit entsprechendes Signal von den anderen am CAN-Bus angeschlossenen Knoten über den CAN-Bus übertragen wird. Die Kenntnis dieses, der reziproken Bitrate entsprechenden Wertes, oder die Kenntnis der Bitrate ist für den ordnungsgemäßen Betrieb des Systems von großer Bedeutung, weil es für eine fehlerfreie Übertragung von Daten über den CAN-Bus zwingend erforderlich ist, daß alle am CAN-Bus angeschlossenen Knoten von ihnen auszugebende Daten mit der selben Bitrate auf den CAN-Bus ausgeben.

Die Ermittlung der reziproken Bitrate erfolgt dadurch, daß der Timer so beschaltet und angesteuert wird, daß er die Anzahl der Takte eines innerhalb oder außerhalb des CAN-Controllers erzeugten Taktsignals zählt, die zwischen zwei aufeinanderfolgenden steigenden Flanken des aus dem Eingangstreiber ID ausgegebenen Signals auftreten. Alternativ könnte vorgesehen werden, daß der Timer so beschaltet und angesteuert wird, daß er die Anzahl der Takte eines innerhalb oder außerhalb des CAN-Controllers erzeugten Taktsignals zählt, die zwischen zwei aufeinanderfolgenden steigenden Flanken des aus dem Eingangstreiber ID ausgegebenen Signals auftreten. Es könnte auch vorgesehen werden, zuerst die zwischen zwei aufeinanderfolgenden fallenden Flanken des Ausgangssignals des Eingangstreibers ID auftretende Anzahl von Taktsignal-Takten zu zählen, und danach die die zwischen zwei aufeinanderfolgenden fallenden Flanken des Ausgangssignals des Eingangstreibers ID auftretende Anzahl von Taktsignal-Takten zu zählen (oder umgekehrt).

Die reziproke Bitrate läßt sich auch aus dem Zählstand des Timers ermitteln, der erhalten wird, wenn die Anzahl der Taktsignal-Takte gezählt wird, die zwischen einer steigenden Flanke und der darauf folgenden fallenden Flanke in dem vom Eingangstreiber ID ausgegebenen Signal auftreten, oder daß die Anzahl der Taktsignal-Takte gezählt wird, die zwischen einer fallenden Flanke und der darauf folgenden steigenden Flanke in dem vom Eingangstreiber ID ausgegebenen Signal auftreten.

Wie der Timer T hierfür jeweils zu beschalten und anzusteuern ist, ist dem Fachmann klar und bedarf keiner näheren Erläuterung.

Ebenfalls klar ist, daß die Messung bzw. die Messungen in Phasen erfolgen müssen, in welchen das über den CAN-Bus übertragene Signal alle n Bits seinen Pegel ändert, wobei n vorzugsweise 1 ist und der Steuereinrichtung (bei automatischer Konfiguration des CAN-Controllers) bzw. dem Benutzer des System (bei durch den Benutzer erfolgender Konfiguration des CAN-Controllers) bekannt ist. Daß die Messung in solchen Phasen erfolgt, kann dadurch erreicht werden, daß die Knoten, von welchen die der Messung zugrundegelegten Daten stammen, während der Messung zur Ausgabe eines bestimmten Bitmusters veranlaßt werden, oder daß die Messung durchgeführt wird, wenn bekannte Daten über den CAN-Bus übertragen werden.

Basierend auf dem bei der Messung erhaltenen Zählstand bzw. basierend auf den bei den Messungen erhaltenen Zählständen des Timers kann die CAN-Controller-Komponente, welche die auf den CAN-Bus auszugebenden Daten generiert, also die Framegenerierungseinrichtung FGU so konfiguriert werden, daß die von ihr ausgegebenen Daten die selbe Bitrate aufweisen wie die von den anderen Knoten auf den CAN-Bus ausgegebenen Signale. Diese Umkonfiguration kann automatisch durch die Steuereinrichtung CTRL oder entsprechend der Vorgabe des Benutzers des Systems erfolgen.

Es kann sich als vorteilhaft erweisen, wenn die genannte Messung bzw. die genannten Messungen für von verschiedenen Knoten stammende Daten wiederholt wird, und daß die vom CAN-Controller CANCTRL zu verwendende Bitrate unter Berücksichtigung aller Messungen festgelegt wird. Insbesondere kann vorgesehen werden, daß dann, wenn die durchgeführten Messungen unterschiedliche Ergebnisse lieferten, die Bitrate so festgelegt wird, daß die Wahrscheinlichkeit des Auftretens von durch eine ungünstig gewählte Bitrate verursachten Fehlern minimal ist. Dies kann beispielsweise dadurch erreicht werden, daß als Bitrate für den CAN-Controller CANCTRL der arithmetischen Mittelwert der Bitraten der anderen Knoten verwendet wird, oder daß als Bitrate für den CAN-Controller CANCTRL der Mittelwert zwischen der höchsten und der niedrigsten Bitrate der anderen Knoten verwendet wird, oder daß die Bitrate für den CAN-Controller CANCTRL so festgelegt wird, daß die Summe der Differenzen zu den Bitraten der anderen Knoten minimal wird.

In einer weiteren (zweiten) Verwendungsmöglichkeit des Timers wird dieser dazu verwendet,
- um den zeitlichen Abstand zu ermitteln, der zwischen dem Zeitpunkt, zu welchem der CAN-Controller ein ihm vom CAN-Bus zugeführtes Signal abtastet, und dem Zeitpunkt liegt, zu welchem das abzutastende Signal die nächste Flanke aufweist, und/oder
- um den zeitlichen Abstand zu ermitteln, der zwischen dem Zeitpunkt, zu welchem der CAN-Controller ein ihm vom CAN-Bus zugeführtes Signal abtastet, und dem Zeitpunkt liegt, zu welchem das abzutastende Signal die letzte Flanke aufwies.

Die Ermittlung der genannten zeitlichen Abstände kann beispielsweise dadurch erfolgen, daß der Timer T zwischen den genannten Zeitpunkten die Anzahl der Takte eines dem Timer zugeführten Taktsignals zählt. Wie der Timer T hierfür jeweils zu beschalten und anzusteuern ist, ist dem Fachmann klar und bedarf keiner näheren Erläuterung.

An den durch den Timer T ermittelten zeitlichen Abständen kann ersehen werden, ob der Zeitpunkt, zu welchem der CAN-Controller ein ihm vom CAN-Bus zugeführtes Signal abtastet, günstig gewählt ist. Liegt der Abtastzeitunkt zu nahe an einer Flanke des abzutastenden Signals, so besteht die Gefahr, daß bei der Abtastung des Signals ein falscher Signalpegel festgelegt und weiterverwendet wird.

Beim CAN-Controller ist es so, daß der für die Übertragung eines Bits reservierte Zeitraum in eine gewisse Anzahl von sogenannten Timequanten unterteilt ist, und daß festgelegt ist, daß die Abtastung der erhaltenen Bits jeweils in einem bestimmten, beispielsweise im sechsten Timequantum erfolgt.

Stellt sich nun bei der vorstehend erwähnten Messung heraus, daß das abzutastende Signal sehr kurz vor oder nach dem Abtsatzeitpunkt eine Flanke aufweist, kann der Abtastzeitpunkt durch eine entsprechende Umkonfiguration der die Abtastung durchführenden Komponente des CAN-Controllers in ein anderes Timequantum, beispielsweise in das siebte oder in das fünfte Timequantum verlegt werden. Diese Umkonfiguration kann automatisch durch die Steuereinrichtung CTRL oder auf externe Veranlassung durch den Benutzer des Systems erfolgen.

Es kann sich als vorteilhaft erweisen, wenn die genannte Messung für von verschiedenen Knoten stammende Daten wiederholt wird, und daß der Abtastzeitpunkt so festgelegt wird, daß sämtliche Daten, d.h. von allen Knoten stammende Daten fehlerfrei abgetastet werden.

Eine dritte Verwendungsmöglichkeit des Timers T besteht darin, daß dieser dazu verwendet, die Laufzeit der auf den CAN-Bus auszugebenden Daten, d.h. die Laufzeit der von der Framegenerierungseinrichtung FGU ausgegebenen Daten innerhalb des CAN-Controllers zu ermitteln.

Dies erfolgt im betrachteten Beispiel dadurch, daß
- durch die Steuereinrichtung CTRL oder den Benutzer des Systems durch eine Verbindung der Anschlüsse TRS und RCV des Mikrocontrollers der Ausgangsanschluß des Ausgangstreibers OD und der Eingangsanschluß des Eingangstreibers ID miteinander verbunden werden, so daß ein aus dem Anschluß TRS ausgegebenes Signal direkt, d.h. ohne Umweg über den Transceiver TR und den CANBUS CANBUS, über den Anschluß RCV wieder in den CAN-Controller CANCTRL zurückgeführt wird, und
- der zeitliche Abstand zwischen dem Zeitpunkt, zu welchem die Framegenerierungseinrichtung FGU ein Bit ausgibt, und dem Zeitpunkt ermittelt wird, zu dem das betreffende Bit bei der Datenauswerteeinrichtung DAU ankommt.

Die Ermittlung des genannten zeitlichen Abstandes kann beispielsweise dadurch erfolgen, daß der Timer T zwischen den genannten Zeitpunkten die Takte eines ihm zugeführten Taktsignals zählt. Wie der Timer T hierfür zu beschalten und anzusteuern ist, ist dem Fachmann klar und bedarf keiner näheren Erläuterung.

Der Zählstand des Timers T repräsentiert die Zeit, die ein von der Framegenerierungseinrichtung FGU ausgegebenes Bit benötigt, um zum Ausgangstreiber OD, durch den Ausgangstreiber OD hindurch, durch den Eingangstreiber ID hindurch und weiter zur Datenauswerteeinrichtung DAU zu gelangen.

Anhand des Zählstandes des Timers T kann mithin überprüft werden, ob der CAN-Controller, genauer gesagt dessen interne Laufzeiten ordnungsgemäße Werte aufweisen.

Anhand der wie beschrieben oder anders ermittelten internen Laufzeit und des Ergebnisses einer weiteren Messung unter Verwendung des Timers T kann auch die optimale Treiberstärke des Ausgangstreibers OD und/oder die optimale Treiberstärke eines in der Sendeeinrichtung TU des Transceivers TR enthaltenen Ausgangstreibers ermittelt werden.

Die genannte weitere Messung unter Verwendung des Timers T, welche eine weitere (vierte) Verwendungsmöglichkeit des Timers T darstellt, ist die Messung der Zeit, die vergeht, bis ein von der Framegenerierungseinrichtung FGU ausgegebenes Signal über den Ausgangstreiber OD und den Transceiver TR zum CAN-Bus, und von diesem wieder zurück über den Transceiver TR und den Eingangstreiber ID zur Datenauswerteeinrichtung DAU gelangt.

Die Ermittlung dieser Zeit kann beispielsweise dadurch erfolgen, daß der Timer T zwischen der Ausgabe des Signals aus der Framegenerierungseinrichtung FGU und dem Empfang dieses Signals durch die Datenauswerteeinrichtung DAU die Anzahl der Takte eines ihm zugeführten Taktsignals zählt. Wie der Timer T hierfür zu beschalten und anzusteuern ist, ist dem Fachmann klar und bedarf keiner näheren Erläuterung.

Die Ermittlung der genannten Zeit ist von Interesse, weil sie größer ist als die Summe der Laufzeiten des betreffenden Signals durch den CAN-Controller CANCTRL und den Transceiver TR, und weil sich aus der Größe der Differenz zwischen der durch den Timer T ermittelten Zeit und der Summe der genannten Laufzeiten und/oder aus der Veränderung der Größe der Differenz in Abhängigkeit von der Einstellung der Treiberstärke des Ausgangstreibers OD und/oder des Ausgangstreibers der Sendeeinrichtung TU des Transceivers TR die optimale Einstellung der Treiberstärke des Ausgangstreibers OD und/oder des Ausgangstreibers der Sendeeinrichtung TU des Transceivers TR ermitteln läßt.

Der Grund dafür, daß die durch den Timer gemessene Zeit größer ist als die Summe der Laufzeiten des betreffenden Signals durch den CAN-Controller CANCTRL und den Transceiver TR, liegt darin,
- daß das vom Ausgangstreiber OD auf die Verbindungsleitung zum Transceiver TR ausgegebene Signal nicht sofort zu einer entsprechenden Pegeländerung auf der Verbindungsleitung führt, denn der vom Ausgangstreiber OD ausgegebene Strom muß erst die durch die Verbindungsleitung gebildete Kapazität umladen, wobei die Dauer dieses Umladevorganges von der Länge der Verbindungsleitung und der Stärke des Ausgangstreibers OD abhängt, und
- daß das vom Ausgangstreiber der Sendeeinrichtung TU des Transceivers TR auf den CAN-Bus ausgegebene Signal nicht sofort zu einer entsprechenden Pegeländerung auf dem CAN-Bus führt, denn der vom Transceiver TR ausgegebene Strom muß erst die durch den CAN-Bus gebildete Kapazität umladen, wobei die Dauer dieses Umladevorganges von der Länge des CAN-Busses und der Stärke des Ausgangstreibers der Sendeeinrichtung TU des Transceivers TR abhängt.

Die Dauer der genannten Umladevorgänge, genauer gesagt
- die Zeit, die zwischen dem Zeitpunkt, zu welchem der Ausgangstreiber OD ein einen bestimmten Pegel aufweisendes Signal auf die Verbindungsleitung zum Transceiver TR ausgibt, und dem Zeitpunkt vergeht, zu welchem sich auf der Verbindungsleitung das Potential einstellt, ab welchem dem über die Verbindungsleitung übertragenen Signal der Pegel des von Transceiver TR ausgegebenen Signals zugeordnet wird, plus
- die Zeit, die zwischen dem Zeitpunkt, zu welchem der Ausgangstreiber der Sendeeinrichtung TU des Transceivers TR ein einen bestimmten Pegel aufweisendes Signal auf den CAN-Bus ausgibt, und dem Zeitpunkt vergeht, zu welchem sich auf dem CAN-Bus das Potential einstellt, ab welchem dem über den CAN-Bus übertragenen Signal der Pegel des von Transceiver TR ausgegebenen Signals zugeordnet wird,
muß sich innerhalb eines bestimmten Bereiches befinden. Ist sie zu groß, so bedeutet dies, daß der Ausgangstreiber OD und/oder der Ausgangstreiber der Sendeeinrichtung TU des Transceivers TR nicht stark genug ist, um die durch die Verbindungsleitung zum Transceiver TR bzw. die durch den Bus repräsentierte Last zu treiben; ist sie zu klein, so bedeutet dies, daß der Ausgangstreiber OD und/oder der Ausgangstreiber der Sendeeinrichtung TU des Transceivers TR stärker ist als es erforderlich ist, und mithin auch stärkere elektromagnetische Störungen verursacht als notwendig.

Die Dauer der genannten Umladevorgänge ist die Differenz zwischen der in der vierten Verwendungsmöglichkeit des Timers T ermittelten Zeit und der Summe der Laufzeiten des zur Messung verwendeten Signals durch den CAN-Controller CANCTRL und den Transceiver TR, wobei sich diese Laufzeiten zusammensetzen aus der in der dritten Verwendungsmöglichkeit des Timers ermittelten Zeit (Signallaufzeit innerhalb CAN-Controllers) und der beispielsweise aus dem Datenblatt entnehmbaren Laufzeit durch den Transceiver TR.

Ist die Differenz zu groß, wird der Ausgangstreiber OD und/oder der Ausgangstreiber der Sendeeinrichtung TU des Transceivers TR so umkonfiguriert, daß sich die Treiberstärke des jeweiligen Ausgangstreibers erhöht; ist die Differenz zu gering, wird der Ausgangstreiber OD und/oder der Ausgangstreiber der Sendeeinrichtung TU des Transceivers TR so umkonfiguriert, daß sich die Treiberstärke des jeweiligen Ausgangstreibers verringert. Diese Umkonfiguration kann automatisch durch die Steuereinrichtung CTRL oder auf externe Veranlassung durch den Benutzer des Systems erfolgen.

In einer fünften Verwendungsmöglichkeit des Timers wird dieser dazu verwendet, die Zeit zu ermitteln, während welcher der CAN-Controller ein einem Bit entsprechendes Signal ausgibt.

Dies kann beispielsweise dadurch erfolgen, daß der Timer T zwischen der steigenden Flanke eines aus dem CAN-Controller auszugebenden Signals und der darauf folgenden fallenden Flanke des aus dem CAN-Controller auszugebenden Signals, oder zwischen der fallenden Flanke eines aus dem CAN-Controller auszugebenden Signals und der darauf folgenden steigenden Flanke des aus dem CAN-Controller auszugebenden Signals die Anzahl der Takte eines dem Timer zugeführten Taktsignals zählt.

Wie der Timer T hierfür jeweils zu beschalten und anzusteuern ist, ist dem Fachmann klar und bedarf keiner näheren Erläuterung.

Ebenfalls klar ist, daß die Messung bzw. die Messungen in Phasen erfolgen müssen, in welchen das aus dem CAN-Controller auszugebende Signal alle n Bits seinen Pegel ändert, wobei n vorzugsweise 1 ist und der Steuereinrichtung (bei automatischer Konfiguration des CAN-Controllers) bzw. dem Benutzer des System (bei durch den Benutzer erfolgender Konfiguration des CAN-Controllers) bekannt ist.

Mit Hilfe dieser Messung kann das Synchronisationsverhalten des CAN-Controllers beobachtet werden, und die ordnungsgemäße Funktion der Bit-Timing-Logik des CAN-Controllers überprüft werden, welche für das ordnungsgemäße Timing der aus dem CAN-Controller ausgegebenen Signale (Bits) zuständig ist.

Eine sechste Verwendungsmöglichkeit des Timers T besteht darin, daß er zur Erzeugung einer Information verwendet wird, anhand welcher erkennbar ist, in welcher Reihenfolge die für den Mikrocontroller bestimmten Frames über den CAN-Bus übertragen wurden. Diese Information kann sich bei der Auswertung der für den Mikrocontroller bestimmten Daten als vorteilhaft erweisen.

Die Ermittlung dieser Information kann beispielsweise dadurch erfolgen, daß der Timer T die für den Mikrocontroller bestimmten Frames zählt, also als Frame Counter verwendet wird. Wie der Timer T hierfür zu beschalten und anzusteuern ist, ist dem Fachmann klar und bedarf keiner näheren Erläuterung.

Eine siebte Verwendungsmöglichkeit des Timers T besteht darin, daß er zur Erzeugung einer auch als Time Stamp bezeichneten Information verwendet wird, anhand welcher erkennbar ist, zu welchem Zeitpunkt die für den Mikrocontroller bestimmten Frames den Mikrocontroller erreichten. Diese Information kann sich bei der Auswertung der für den Mikrocontroller bestimmten Daten als vorteilhaft erweisen.

Die Ermittlung dieser Information erfolgt dadurch , daß der Timer T fortlaufend die Takte eines ihm zugeführten Taktsignals zählt. Wie der Timer T hierfür zu beschalten und anzusteuern ist, ist dem Fachmann klar und bedarf keiner näheren Erläuterung.

Durch die verschiedenen Verwendungsmöglichkeiten des Timers T, insbesondere durch die erste bis fünfte Verwendungsmöglichkeit kann dieser für die Konfiguration des CAN-Controllers benötigte Informationen ermitteln, die durch ein externes Testgerät nur mit größerem Aufwand, langsamer, ungenauer, oder überhaupt nicht ermittelt werden können.

Darüber hinaus ist der beschriebene CAN-Controller auch in der Lage, sich selbst an die gegebenen Verhältnisse anzupassen.

Da der Timer auch für andere Zwecke einsetzbar ist (siehe die sechste und die siebte Verwendungsmöglichkeit), bzw. die bekannten CAN-Controller meistens schon von Haus aus einen Timer enthalten, erfordert die Verwendung des Timers für die Beschaffung von für die Konfiguration des CAN-Controllers benötigten Daten nur einen vernachlässigbar geringen Zusatzaufwand.

## Patentansprüche

1. Vorrichtung mit einem Bus-Interface (CANCTRL) und einem Timer (T),
wobei das Bus-Interface (CANCTRL) zum Anschluß einer Einrichtung (Nx) an einen mehrere Einrichtungen (Ni- Nn) miteinander verbindenden Bus (CANBUS)ausgebildet ist,
**dadurch gekennzeichnet,**
**daß** durch den Timer das Timing von innerhalb des Bus-Interfaces (CANCTRL) und/oder auf dem Bus (CANBUS) stattfindenden Vorgängen ermittelbar ist, und
**daß** der Timer (T) zur Ermittlung der Längen der Zeiten von mindestens zwei unterschiedlichen Vorgängen ausgelegt ist (MUX1, MUX2) und während der Zeit, deren Länge zu ermitteln ist, die Takte eines dem Timer (T) zugeführten Taktsignals zählt.

2. Vorrichtung nach Anspruch 1,
**dadurch gekennzeichnet,**
**daß** der Timer (T) so verschaltet und angesteuert wird, daß durch ihn der Reziprokwert der Übertragungsrate der von einem anderen Busknoten (N1 bis Nn) über den Bus (CANBUS) transferierten Daten ermittelt wird.

3. Vorrichtung nach Anspruch 2,
**dadurch gekennzeichnet,**
**daß** die Ermittlung des Reziprokwertes der Übertragungsrate **dadurch** erfolgt, daß der Timer (T) die Länge der Zeit ermittelt, die zwischen dem Auftreten von zwei bestimmten Flanken in dem über den Bus (CANBUS) übertragenen Signal vergeht.

4. Vorrichtung nach Anspruch 2 oder 3,
**dadurch gekennzeichnet,**
**daß** das Ergebnis der Ermittlung zur Festlegung der vom Bus-Interface (CANCTRL) zu verwendenden Datenübertragungsrate verwendet wird.

5. Vorrichtung nach einem der vorhergehenden Ansprüche,
**dadurch gekennzeichnet,**
**daß** der Timer (T) so verschaltet und angesteuert wird, daß durch ihn die Länge der Zeit ermittelt wird, die zwischen dem Zeitpunkt der Abtastung eines ihm zugeführten Signals, und dem Auftreten der vor oder nach dem Abtastzeitpunkt auftretenden Flanke im abzutastenden Signal liegt.

6. Vorrichtung nach Anspruch 5,
**dadurch gekennzeichnet,**
**daß** das Ergebnis der Ermittlung zur Festlegung der Zeitpunkte verwendet wird, zu welchen das Bus-Interface (CANCTRL) ihm zugeführte Signale abtastet.

7. Bus-Interface nach einem der vorhergehenden Ansprüche,
**dadurch gekennzeichnet,**
**daß** der Timer (T) so verschaltet und angesteuert wird, daß durch ihn eine interne Signallaufzeit des Bus-Interfaces (CANCTRL) ermittelt wird.

8. Vorrichtung nach Anspruch 7,
**dadurch gekennzeichnet,**
**daß** die Ermittlung der internen Signallaufzeit **dadurch** erfolgt, daß die Länge der Zeit ermittelt wird, die vergeht, bis ein auf den Bus (CANBUS) auszugebendes Signal von einer ersten Stelle innerhalb des Bus-Interfaces (CANCTRL) über einen mit dem Bus (CANBUS) verbundenen Ausgangsanschluß (TRS) des Bus-Interfaces (CANCTRL) und einen mit dem Bus (CANBUS) verbundenen Eingangsanschluß (RCV) des Bus-Interfaces (CANCTRL) zu einer zweiten Stelle innerhalb des Bus-Interfaces (CANCTRL) gelangt.

9. Vorrichtung nach Anspruch 8,
**dadurch gekennzeichnet,**
**daß** der Ausgangsanschluß (TRS) und der Eingangsanschluß (RCV) des Bus-Interfaces (CANCTRL) während der Ermittlung der internen Signallaufzeit miteinander verbunden werden.

10. Vorrichtung nach Anspruch 5 oder 6,
**dadurch gekennzeichnet,**
**daß** das Ergebnis der Ermittlung zur Überprüfung der ordnungsgemäßen Funktion des Bus-Interfaces (CANCTRL) verwendet wird.

11. Vorrichtung nach einem der vorhergehenden Ansprüche,
**dadurch gekennzeichnet,**
**daß** der Timer (T) so verschaltet und angesteuert wird, daß durch ihn die Länge der Zeit ermittelt wird, die vergeht, bis ein auf den Bus (CANBUS) auszugebendes Signal von einer ersten Stelle innerhalb des Bus-Interfaces (CANCTRL) über den Bus (CANBUS) zu einer zweiten Stelle innerhalb des Bus-Interfaces (CANCTRL) gelangt.

12. Vorrichtung nach Anspruch 11,
**dadurch gekennzeichnet,**
**daß** das Ergebnis der Ermittlung zur Einstellung der Treiberstärke eines Treibers (OD) verwendet wird, durch welchen die vom Bus-Interface (CANCTRL) auf den Bus (CANBUS) auszugebenden Signale auf den Bus ausgegeben werden.

13. Vorrichtung nach einem der vorhergehenden Ansprüche,
**dadurch gekennzeichnet,**
**daß** der Timer (T) so verschaltet und angesteuert wird, daß durch ihn eine Information generiert wird, die den Zeitpunkt angibt, zu welchem das Bus-Interface (CANCTRL) über den Bus (CANBUS) transferierte Daten erhalten hat.

14. Vorrichtung nach einem der vorhergehenden Ansprüche,
**dadurch gekennzeichnet,**
**daß** der Timer (T) so verschaltet und angesteuert wird, daß durch ihn eine Information generiert wird, die die Reihenfolge angibt, in welcher das Bus-Interface (CANCTRL) über den Bus (CANBUS) transferierte Daten erhalten hat.

## Claims

1. Apparatus having a bus interface (CANCTRL) and a timer (T), the bus interface (CANCTRL) being designed to connect a device (Nx) to a bus (CANBUS) which connects a plurality of devices (Ni-Nn) to one another,
**characterized in that**
the timer can be used to determine the timing of operations taking place inside the bus interface (CANCTRL) and/or on the bus (CANBUS), and
**in that** the timer (T) is designed to determine the lengths of time of at least two different operations (MUX1, MUX2) and, during the time whose length is to be determined, counts the clock pulses of a clock signal supplied to the timer (T).

2. Apparatus according to Claim 1,
**characterized in that**
the timer (T) is connected and driven in such a manner that it determines the reciprocal of the transmission rate of the data transferred from another bus node (N1 to Nn) via the bus (CANBUS).

3. Apparatus according to Claim 2,
**characterized in that**
the reciprocal of the transmission rate is determined by the timer (T) determining the length of time which elapses between the occurrence of two particular edges in the signal transmitted via the bus (CANBUS).

4. Apparatus according to Claim 2 or 3,
**characterized in that**
the result of the determination is used to set the data transmission rate to be used by the bus interface (CANCTRL).

5. Apparatus according to one of the preceding claims,
**characterized in that**
the timer (T) is connected and driven in such a manner that it determines the length of time between the point in time at which a signal supplied to it is sampled and the occurrence of the edge in the signal to be sampled, which edge occurs before or after the sampling time.

6. Apparatus according to Claim 5,
**characterized in that**
the result of the determination is used to set the points in time at which the bus interface (CANCTRL) samples signals supplied to it.

7. Bus interface according to one of the preceding claims,
**characterized in that**
the timer (T) is connected and driven in such a manner that it determines an internal signal propagation time of the bus interface (CANCTRL).

8. Apparatus according to Claim 7,
**characterized in that**
the internal signal propagation time is determined by determining the length of time which elapses before a signal to be output onto the bus (CANBUS) passes from a first location inside the bus interface (CANCTRL), via an output connection (TRS) of the bus interface (CANCTRL) that is connected to the bus (CANBUS) and an input connection (RCV) of the bus interface (CANCTRL) that is connected to the bus (CANBUS), to a second location inside the bus interface (CANCTRL).

9. Apparatus according to Claim 8,
**characterized in that**
the output connection (TRS) and the input connection (RCV) of the bus interface (CANCTRL) are connected to one another while the internal signal propagation time is being determined.

10. Apparatus according to Claim 5 or 6,
**characterized in that**
the result of the determination is used to check the proper operation of the bus interface (CANCTRL).

11. Apparatus according to one of the preceding claims,
**characterized in that**
the timer (T) is connected and driven in such a manner that it determines the length of time which elapses before a signal to be output onto the bus (CANBUS) passes from a first location inside the bus interface (CANCTRL), via the bus (CANBUS), to a second location inside the bus interface (CANCTRL).

12. Apparatus according to Claim 11,
**characterized in that**
the result of the determination is used to set the driver strength of a driver (OD) by means of which the signals to be output onto the bus (CANBUS) from the bus interface (CANCTRL) are output onto the bus.

13. Apparatus according to one of the preceding claims,
**characterized in that**
the timer (T) is connected and driven in such a manner that it generates an item of information which indicates the point in time at which the bus interface (CANCTRL) has received data transferred via the bus (CANBUS).

14. Apparatus according to one of the preceding claims,
**characterized in that**
the timer (T) is connected and driven in such a manner that it generates an item of information which indicates the order in which the bus interface (CANCTRL) has received data transferred via the bus (CANBUS).

## Revendications

1. Dispositif doté d'une interface de bus (CANCTRL) et d'une horloge (T),
l'interface de bus (CANCTRL) étant configurée pour raccorder un système (Nx) à un bus (CANBUS) qui relie les uns aux autres plusieurs systèmes (Ni-Nn),
**caractérisé en ce que**
l'horloge permet de déterminer la cadence des opérations qui ont lieu à l'intérieur de l'interface de bus (CANCTRL) et/ou sur le bus (CANBUS) et
**en ce que** l'horloge (T) est conçue pour déterminer la durée d'au moins deux opérations différentes (MUX1, MUX2) et **en ce que** pendant la durée dont la longueur doit être déterminée, elle compte les cadences d'un signal d'horloge amené à l'horloge (T).

2. Dispositif selon la revendication 1, **caractérisé en ce que** l'horloge (T) est branchée et commandée de telle sorte qu'elle détermine la valeur de l'inverse du taux de transfert des données transférées par un autre noeud de bus (N1 à Nn) par l'intermédiaire du bus (CANBUS).

3. Dispositif selon la revendication 2, **caractérisé en ce que** la détermination de la valeur de l'inverse du taux de transfert s'effectue en faisant déterminer par l'horloge (T) la durée qui s'écoule entre l'apparition de deux flancs définis dans le signal transféré par l'intermédiaire du bus (CANBUS).

4. Dispositif selon les revendications 2 ou 3, **caractérisé en ce que** le résultat de la détermination est utilisé pour définir le taux de transfert de données qui doit être utilisé par l'interface de bus (CANCTRL).

5. Dispositif selon l'une des revendications précédentes, **caractérisé en ce que** l'horloge (T) est raccordée et commandée de telle sorte qu'elle détermine la durée qui s'écoule entre l'instant de l'échantillonnage d'un signal qui lui est apporté et l'apparition dans le signal à échantillonner du flanc situé avant ou après l'instant d'échantillonnage.

6. Dispositif selon la revendication 5, **caractérisé en ce que** le résultat de la détermination est utilisé pour définir les instants auxquels l'interface de bus (CANCTRL) échantillonne les signaux qui lui sont apportés.

7. Interface de bus selon l'une des revendications précédentes, **caractérisée en ce que** l'horloge (T) est raccordée et commandée de telle sorte qu'elle détermine le temps de parcours interne de l'interface de bus (CANCTRL) par le signal.

8. Dispositif selon la revendication 7, **caractérisé en ce que** la détermination du temps interne de parcours du signal s'effectue en déterminant la durée qui s'écoule jusqu'à ce qu'un signal qui doit être délivré sur le bus (CANBUS) en provenance d'un premier emplacement situé à l'intérieur de l'interface de bus (CANCTRL) aboutisse à un deuxième emplacement situé à l'intérieur de l'interface de bus (CANCTRL) en passant par une borne de sortie (TRS) de l'interface de bus (CANCTRL) reliée au bus (CANBUS) et une borne d'entrée (RCV) de l'interface de bus (CANCTRL) reliée au bus (CANBUS).

9. Dispositif selon la revendication 8, **caractérisé en ce que** la borne de sortie (TRS) et la borne d'entrée (RCV) de l'interface de bus (CANCTRL) sont reliées l'une à l'autre pendant la détermination du temps de parcours interne du signal.

10. Dispositif selon les revendications 5 ou 6, **caractérisé en ce que** le résultat de la détermination est utilisé pour vérifier le fonctionnement correct de l'interface de bus (CANCTRL).

11. Dispositif selon l'une des revendications précédentes, **caractérisé en ce que** l'horloge (T) est raccordée et commandée de telle sorte qu'elle détermine la durée qui s'écoule jusqu'à ce qu'un signal qui doit être délivré sur le bus (CANBUS) depuis un premier emplacement situé à l'intérieur de l'interface de bus (CANCTRL) aboutisse à un deuxième emplacement situé à l'intérieur de l'interface de bus (CANCTRL) en passant par le bus (CANBUS).

12. Dispositif selon la revendication 11, **caractérisé en ce que** le résultat de la détermination est utilisé pour régler l'intensité d'entraînement d'un pilote (OD) par lequel les signaux qui doivent être délivrés sur le bus (CANBUS) par l'interface de bus (CANCTRL) sont délivrés sur le bus.

13. Dispositif selon l'une des revendications précédentes, **caractérisé en ce que** l'horloge (T) est raccordée et commandée de telle sorte qu'elle génère une information qui indique l'instant auquel l'interface de bus (CANCTRL) a reçu les données transférées par l'intermédiaire du bus (CANBUS).

14. Dispositif selon l'une des revendications précédentes, **caractérisé en ce que** l'horloge (T) est raccordée et commandée de telle sorte qu'elle génère une information qui indique la succession dans laquelle l'interface de bus (CANCTRL) a reçu les données transférées par l'intermédiaire du bus (CANBUS).
